# EUROPEAN PATENT APPLICATION

(11) **EP 3 159 146 A1**
(43) Date of publication of application: **26.04.2017**
(21) Application number: 15886337.3
(22) Date of filing: 24.03.2015
(51) Int. Cl.: B29C 67/00, G06F 17/50

(54) **3D PRINTING SYSTEM, METHOD FOR PRODUCING 3D PRINTED OBJECT, INFORMATION PROCESSING DEVICE, METHOD FOR GENERATING SHRINK-RESISTANT STRUCTURE IN 3D OBJECT, AND PROGRAM FOR GENERATING SHRINK-RESISTANT STRUCTURE IN 3D PRINTED OBJECT**

(71) Applicant: Technology Research Association for Future Additive Manufacturing, Tokyo 103-0027 (JP)
(72) Inventor: SUGIURA, Yukito, Yokohama-shi Kanagawa 222-0033 (JP)
(74) Representative: TBK
(86) International application number: PCT/JP2015/059006
(87) International publication number: WO 2016/151784

(57) **Abstract**

This invention provides an information processing apparatus for fabricating a desired three-dimensional fabricated object by suppressing shrinkage of a fabricated object caused by a temperature drop in a laminated portion at a fabricating time of the three-dimensional fabricated object. This information processing apparatus includes an acquirer that acquires laminating and fabricating data of a three-dimensional fabricating model, and a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction. The shrinkage suppression structure model is a plate-like structure model extending in the predetermined direction and having a length which can suppress shrinkage after laminating and fabricating.

## Description

### TECHNICAL FIELD

The present invention relates to a technique of generating a shrinkage suppression structure of a three-dimensional fabricated object.

### BACKGROUND ART

In the above technical field, patent literature 1 discloses a technique of generating data of a support mesh for supporting a laminated object at the time of laminating and manufacturing a three-dimensional object.

### CITATION LIST

### PATENT LITERATURE

Patent literature 1: Japanese Patent No. 5383687

### SUMMARY OF THE INVENTION

### TECHNICAL PROBLEM

The technique described in the above literature, however, intends to support a three-dimensional fabricated object. Thus, the technique does not mention a method of suppressing shrinkage of a fabricated object along with a temperature drop when sintering or coupling small particles of a plastic, metal, or ceramic powder into a lump representing a three-dimensional object using a high-power laser, an electron beam, or another focused heat source in selective laser sintering (SLS) or the like. As a result, a distortion, twist, or crack occurs in the shape of a three-dimensional fabricated object due to shrinkage caused by a temperature drop at the time of fabricating or after fabricating.

The present invention enables to provide a technique of solving the above-described problem.

### SOLUTION TO PROBLEM

One aspect of the present invention provides an information processing apparatus comprising:
an acquirer that acquires laminating and fabricating data of a three-dimensional fabricating model; and
a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

Another aspect of the present invention provides a method of generating a shrinkage suppression structure of a three-dimensional fabricated object, comprising:
acquiring laminating and fabricating data of a three-dimensional fabricating model; and
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

Still other aspect of the present invention provides a program for generating a shrinkage suppression structure of a three-dimensional fabricated object, for causing a computer to execute a method, comprising:
acquiring laminating and fabricating data of a three-dimensional fabricating model; and
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

Still other aspect of the present invention provides a three-dimensional fabricating system comprising:
a model generator that generates laminating and fabricating data of a three-dimensional fabricating model from data representing a three-dimensional fabricated object;
a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction; and
a laminating and fabricating unit that fabricates a three-dimensional fabricated object added with a shrinkage suppression structural object in accordance with the laminating and fabricating data generated by the data generator.

Still other aspect of the present invention provides a method of manufacturing a three-dimensional fabricated object, comprising:
generating laminating and fabricating data of a three-dimensional fabricating model from data representing a three-dimensional fabricated object;
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction; and
fabricating a three-dimensional fabricated object added with a shrinkage suppression structural object in accordance with the laminating and fabricating data generated in the generating step.

### ADVANTAGEOUS EFFECTS OF INVENTION

According to the present invention, it is possible to fabricate a desired three-dimensional fabricated object by suppressing shrinkage of the fabricated object caused by a temperature drop in a laminated portion at the time of fabricating the three-dimensional fabricated object.

### BRIEF DESCRIPTION OF DRAWINGS

Fig. 1 is a block diagram showing the arrangement of an information processing apparatus according to the first embodiment of the present invention;
Fig. 2 is a view showing an overview of shrinkage suppression structural object addition according to the second embodiment of the present invention;
Fig. 3 is a block diagram showing the configuration of a three-dimensional fabricating system including an information processing apparatus according to the second embodiment of the present invention;
Fig. 4A is a block diagram showing the arrangement of a shrinkage suppression structure model adder according to the second embodiment of the present invention;
Fig. 4B is a block diagram showing the arrangement of a fabricated object shrinkage predictor according to the second embodiment of the present invention;
Fig. 5A is a table showing the structure of a three-dimensional fabricating model generation table according to the second embodiment of the present invention;
Fig. 5B is a table showing the structure of a fabricated object width calculation position setting table according to the second embodiment of the present invention;
Fig. 5C is a table showing the structure of a shrinkage suppression structure model selection/arrangement table according to the second embodiment of the present invention;
Fig. 5D is a table showing the structure of a shrinkage suppression structure model database according to the second embodiment of the present invention;
Fig. 6 is a block diagram showing the hardware arrangement of the information processing apparatus according to the second embodiment of the present invention;
Fig. 7A is a flowchart illustrating the three-dimensional fabricated object manufacturing procedure of the three-dimensional fabricating system according to the second embodiment of the present invention;
Fig. 7B is a flowchart illustrating the procedure of the shrinkage suppression structure model addition processing of the information processing apparatus according to the second embodiment of the present invention;
Fig. 7C is a flowchart illustrating the procedure of fabricated object shrinkage prediction processing according to the second embodiment of the present invention;
Fig. 8 is a view showing an overview of shrinkage suppression structural object addition according to the third embodiment of the present invention;
Fig. 9 is a view showing an overview of shrinkage suppression structural object addition according to the fourth embodiment of the present invention;
Fig. 10 is a view showing an overview of shrinkage suppression structural object addition according to the fifth embodiment of the present invention; and
Fig. 11 is a block diagram showing the arrangement of a shrinkage suppression structure model adder according to the sixth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

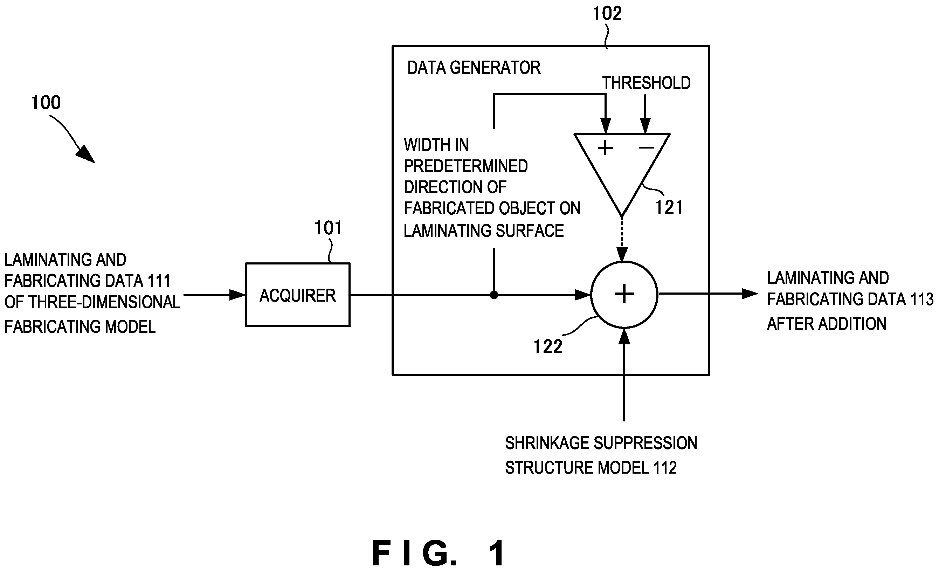

An information processing apparatus 100 according to the first embodiment of the present invention will be described with reference to Fig. 1. The information processing apparatus 100 is an apparatus for generating a shrinkage suppression structure of a three-dimensional fabricated object.

As shown in Fig. 1, the information processing apparatus 100 includes an acquirer 101 and a data generator 102. The acquirer 101 acquires laminating and fabricating data 111 of a three-dimensional fabricating model. If the width in a predetermined direction of a fabricated object on a laminating surface is equal to or larger than a threshold (121), the data generator 102 generates laminating and fabricating data 113 by adding, to the three-dimensional fabricating model, a shrinkage suppression structure model 112 for suppressing shrinkage after laminating and fabricating in the predetermined direction.

According to this embodiment, it is possible to fabricate a desired three-dimensional fabricated object by adding, to a three-dimensional fabricating model, a shrinkage suppression structure model for suppressing shrinkage after laminating and fabricating, and suppressing shrinkage of the fabricated object caused by a temperature drop in a laminated portion at a laminating and fabricating time of the three-dimensional fabricated object.

### [Second Embodiment]

A three-dimensional fabricating system including an information processing apparatus according to the second embodiment of the present invention will be described next. If the width in a predetermined direction of a fabricated object on a laminating surface exceeds a threshold, the three-dimensional fabricating system according to this embodiment generates, in the information processing apparatus, laminating and fabricating data by adding, to a three-dimensional fabricating model, a shrinkage suppression structure model for suppressing shrinkage after laminating and fabricating in the predetermined direction. After fabricating a three-dimensional fabricated object added with a shrinkage suppression fabricated object in accordance with the laminating and fabricating data of the three-dimensional fabricating model, the three-dimensional fabricating system deletes the shrinkage suppression structural object from the laminated and fabricated three-dimensional fabricated object.

The shrinkage suppression structure model extending in the predetermined direction is added by cutting the laminating surface, perpendicular to a laminating direction, of the three-dimensional fabricating model in two directions orthogonal to each other at a predetermined interval, and selecting, as an addition position, a position at which the cut length is equal to or longer than the threshold. Note that the shrinkage suppression structure model is a plate-like structure model extending in the predetermined direction and having a length which can suppress shrinkage after laminating and fabricating, and the first fabricating layer is in tight contact with a fabricated object support table. Furthermore, the shrinkage suppression structure model is added to a position at which it can be deleted from the three-dimensional fabricated object after laminating and fabricating. A plurality of shrinkage suppression structure models which are different in at least one of a shape, thickness, and area are stored, and then a shrinkage suppression structure model to be added is selected from the plurality of shrinkage suppression structure models based on the shape and cut length of the three-dimensional fabricating model.

### «Overview of Shrinkage Suppression Structural Object Addition»

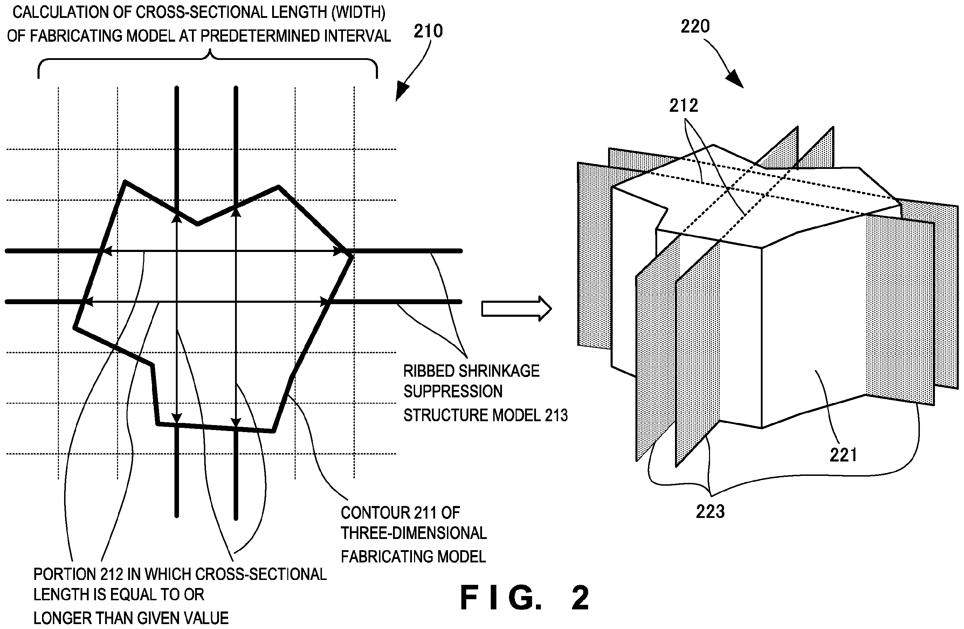

Fig. 2 is a view showing an overview of addition of shrinkage suppression structural objects 223 according to this embodiment.

Fig. 2 shows a plan view when viewing a three-dimensional fabricating model from above the laminating surface on the left side, and a perspective view of a laminated and fabricated three-dimensional fabricated object on the right side. The left view shows a contour 211 of the three-dimensional fabricating model when viewed from above the laminating surface. In this embodiment, each cross-sectional length obtained by cutting the contour 211 of the three-dimensional fabricating model at a predetermined interval in axial directions orthogonal to each other on the laminating surface, that is, each width of the three-dimensional fabricating model on the laminating surface is calculated. A new three-dimensional fabricating model 210 to be fabricated by a three-dimensional fabricating apparatus is obtained by adding ribbed shrinkage suppression structure models 213 in the directions of cut lines (or surfaces) outside the cut positions of portions 212, in each of which the cross-sectional length (width) is equal to or longer than a predetermined threshold, thereby generating laminating and fabricating data to be provided to the three-dimensional fabricating apparatus.

The three-dimensional fabricating apparatus laminates and fabricates a three-dimensional fabricated object 220 shown in the right view based on the provided laminating and fabricating data. In the laminated and fabricated three-dimensional fabricated object 220, the ribbed shrinkage suppression structural objects 223 are added to the portions 212 in each of which the cross-sectional length (width) of a three-dimensional fabricated object 221 to be obtained is equal to or longer than the predetermined threshold. Note that although not shown, the shrinkage suppression structural objects 223 are deleted from the laminated and fabricated three-dimensional fabricated object 220 by a shrinkage suppression structural object deletion apparatus or the like, thereby obtaining the three-dimensional fabricated object 221.

### «Three-Dimensional Fabricating System»

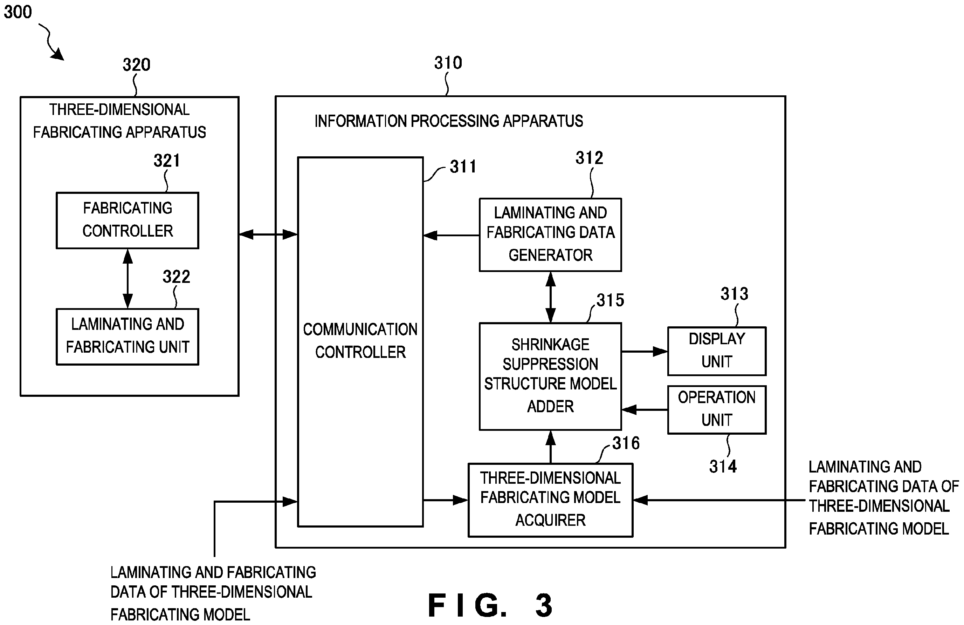

Fig. 3 is a block diagram showing the configuration of a three-dimensional fabricating system 300 including an information processing apparatus 310 according to this embodiment.

The three-dimensional fabricating system 300 includes the information processing apparatus 310 for generating laminating and fabricating data of a three-dimensional fabricating model, and a three-dimensional fabricating apparatus 320 for laminating and fabricating a three-dimensional fabricated object in accordance with the laminating and fabricating data. Note that Fig. 3 shows the configuration in which the information processing apparatus 310 and the three-dimensional fabricating apparatus 320 are connected by communication. However, these apparatuses may be integrated or may be separated into a plurality of apparatuses for respective functions.

The information processing apparatus 310 includes a communication controller 311, a laminating and fabricating data generator 312, a display unit 313, an operation unit 314, a shrinkage suppression structure model adder 315, and a three-dimensional fabricating model acquirer 316.

The communication controller 311 controls communication with the three-dimensional fabricating apparatus 320, and transmits laminating and fabricating data generated by the laminating and fabricating data generator 312 to the three-dimensional fabricating apparatus 320. If the communication controller 311 receives, via communication, the laminating and fabricating data of a three-dimensional fabricating model to be acquired by the three-dimensional fabricating model acquirer 316, it transfers the received laminating and fabricating data to the three-dimensional fabricating model acquirer 316.

The three-dimensional fabricating model acquirer 316 acquires, via the communication controller 311 or via a bus from a storage medium or the like, the laminating and fabricating data of the three-dimensional fabricating model for laminating and fabricating a three-dimensional fabricated object. Note that the information processing apparatus 310 may have a function of acquiring data representing the three-dimensional fabricated object, and generating laminating and fabricating data of a three-dimensional fabricating model. This processing may be shared with the laminating and fabricating data generator 312.

The display unit 313 displays the three-dimensional fabricating model, a shrinkage suppression structure model, or the three-dimensional fabricating model added with the shrinkage suppression structure model, thereby notifying the user of it. The operation unit 314 receives an operation input such as a shrinkage suppression structure model addition instruction by the user.

The shrinkage suppression structure model adder 315 selects a shrinkage suppression structure model in correspondence with fabricated object shrinkage prediction at the time of laminating and fabricating the three-dimensional fabricating model acquired by the three-dimensional fabricating model acquirer 316, and arranges it at a selected position in the three-dimensional fabricating model. The laminating and fabricating data generator 312 generates new laminating and fabricating data from the three-dimensional fabricating model after addition in which the shrinkage suppression structure model is arranged. The laminating and fabricating data generator 312 includes a data transmitter for transmitting the new laminating and fabricating data to the three-dimensional fabricating apparatus 320 via the communication controller 311.

The three-dimensional fabricating apparatus 320 includes a fabricating controller 321 and a laminating and fabricating unit 322. The fabricating controller 321 controls laminating and fabricating of a three-dimensional fabricated object by the laminating and fabricating unit 322 in accordance with the laminating and fabricating data of the three-dimensional fabricating model received from the communication controller 311. Under the control of the fabricating controller 321, the laminating and fabricating unit 322 laminates and fabricates the three-dimensional fabricated object by selecting the shape of the three-dimensional fabricated object and melting a granular material, particularly a metal powder by a laser beam or the like for each lamination. Note that the laminating and fabricating method of the three-dimensional fabricating apparatus 320 is not limited. In this embodiment, any laminating and fabricating method in which the temperature becomes high at the time of laminating and fabricating and shrinkage of a fabricated object occurs at the time of a temperature drop is used.

### (Method of Manufacturing Three-Dimensional Fabricated Object)

In this three-dimensional fabricating system 300, a three-dimensional fabricated object is manufactured in the following steps. In a model generation step, the information processing apparatus 310 or another apparatus generates laminating and fabricating data of a three-dimensional fabricating model from data representing a three-dimensional fabricated object. In a data generation step, if the width in a predetermined direction of the fabricated object on the laminating surface is equal to or larger than the threshold, the information processing apparatus 310 generates laminating and fabricating data of the three-dimensional fabricating model added with a shrinkage suppression structure model for suppressing shrinkage after laminating and fabricating in the predetermined direction. In a laminating and fabricating step, the three-dimensional fabricating apparatus 320 fabricates the three-dimensional fabricated object added with the shrinkage suppression structural object in accordance with the laminating and fabricating data of the three-dimensional fabricating model generated in the data generation step.

### (Shrinkage Suppression Structure model Adder)

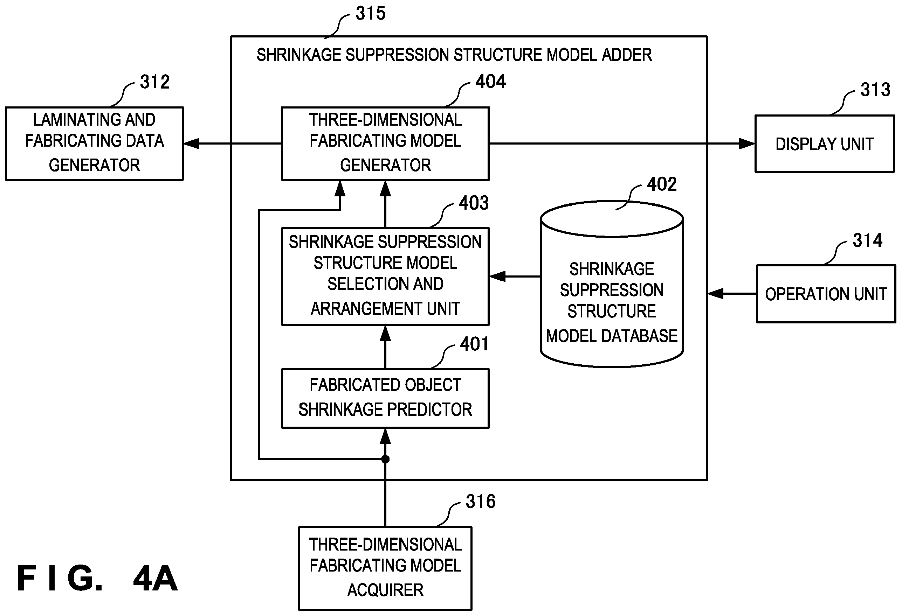

Fig. 4A is a block diagram showing the arrangement of the shrinkage suppression structure model adder 315 according to this embodiment.

The shrinkage suppression structure model adder 315 includes a fabricated object shrinkage predictor 401, a shrinkage suppression structure model database 402, a shrinkage suppression structure model selection and arrangement unit 403, and a three-dimensional fabricating model generator 404. The shrinkage suppression structure model adder 315 executes shrinkage suppression structure model addition in accordance with a shrinkage suppression structure model addition instruction by the operation unit 314.

Note that a material property to be used by the three-dimensional fabricating apparatus 320 or fine parameters to be used for fabricated object shrinkage prediction or shrinkage suppression structure model selection and arrangement may be input from the operation unit 314. Alternatively, if the model of the three-dimensional fabricating apparatus 320 and a material to be used are input, parameters may be set.

The fabricated object shrinkage predictor 401 predicts the shrinkage state of the laminated and fabricated three-dimensional fabricated object based on the material used by the three-dimensional fabricating apparatus 320 for laminating and fabricating, information about a temperature at the time of laminating and fabricating, and attributes such as the shape and material property of the three-dimensional fabricating model from the data of the three-dimensional fabricating model transferred from the three-dimensional fabricating model acquirer 316. The temperature of a laminated portion becomes high at the time of laminating, and the laminated portion readily shrinks along with a temperature drop caused by heat dissipation of the three-dimensional fabricating. Note that the shrinkage state is also influenced by the laminating and fabricating speed of the three-dimensional fabricating apparatus 320.

The shrinkage suppression structure model database 402 stores a shrinkage suppression structure model to be added in correspondence with fabricated object shrinkage prediction of a three-dimensional fabricating model. Note that the shrinkage suppression structure model database 402 may store each shrinkage suppression structure model, or a set of a plurality of models in association with the status of fabricated object shrinkage prediction. In the example of Fig. 2, the shrinkage suppression structure models including a set of models added to the two sides of a portion where the cut length (the width of the fabricated object) is equal to or longer than the threshold are stored. Alternatively, a set of more preferable shrinkage suppression structure models such as a set of a plurality of positions in the same cut direction may be stored.

The shrinkage suppression structure model selection and arrangement unit 403 selects a shrinkage suppression structure model from the shrinkage suppression structure model database 402 in correspondence with fabricated object shrinkage prediction by the fabricated object shrinkage predictor 401, and determines an arrangement in the three-dimensional fabricating model.

The three-dimensional fabricating model generator 404 generates a new three-dimensional fabricating model by adding, to the three-dimensional fabricating model, the shrinkage suppression structure model selected and arranged by the shrinkage suppression structure model selection and arrangement unit 403. The three-dimensional fabricating model generator 404 outputs data of the three-dimensional fabricating model added with the shrinkage suppression structure model to the laminating and fabricating data generator 312, and simultaneously outputs the data to the display unit 313 to display it.

### (Fabricated Object Shrinkage Predictor)

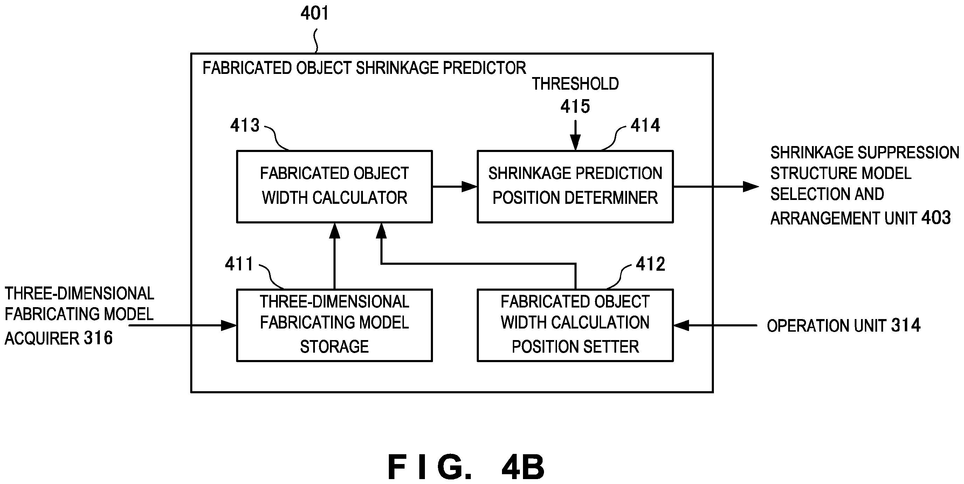

Fig. 4B is a block diagram showing the arrangement of the fabricated object shrinkage predictor 401 according to this embodiment.

The fabricated object shrinkage predictor 401 includes a three-dimensional fabricating model storage 411, a fabricated object width calculation position setter 412, a fabricated object width calculator 413, and a shrinkage prediction position determiner 414. The three-dimensional fabricating model storage 411 stores the data of the three-dimensional fabricating model transmitted from the three-dimensional fabricating model acquirer 316. The fabricated object width calculation position setter 412 sets the cut direction and cut interval of the laminating surface of the three-dimensional fabricating model input by the user using the operation unit 314. Note that the cut direction and cut interval of the laminating surface need not be input by the user, and may be setting values set in advance or setting values based on the shape feature and fabricating material property of the three-dimensional fabricating model.

The fabricated object width calculator 413 cuts the three-dimensional fabricating model stored in the three-dimensional fabricating model storage 411 in accordance with the cut direction and cut interval of the laminating surface, which have been set by the fabricated object width calculation position setter 412, and calculates a fabricated object width (cut length). If the fabricated object width (cut length) calculated by the fabricated object width calculator 413 is equal to or larger than a predetermined threshold 415, the shrinkage prediction position determiner 414 determines the cut position as a fabricated object shrinkage prediction position. The fabricated object shrinkage prediction position is output to the shrinkage suppression structure model selection and arrangement unit 403.

### (Three-Dimensional Fabricating Model Generation Table)

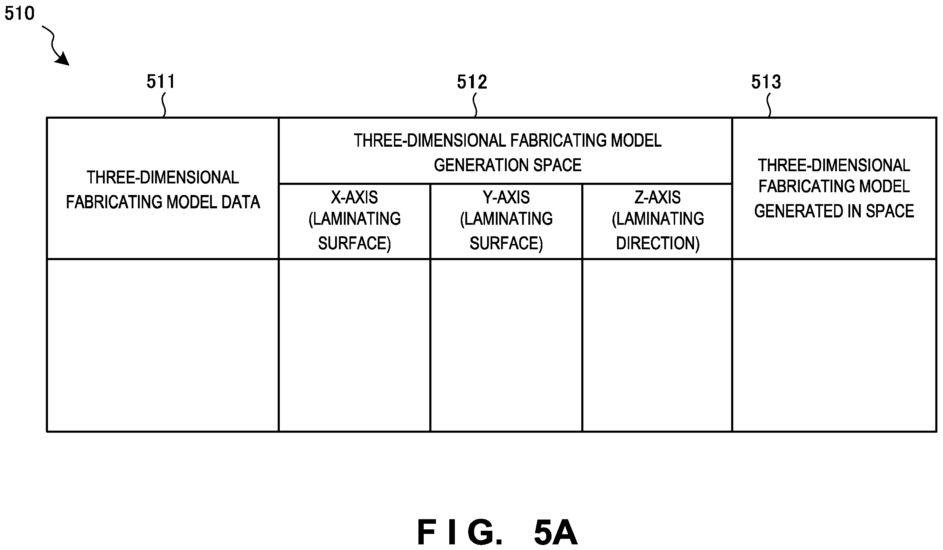

Fig. 5A is a table showing the structure of a three-dimensional fabricating model generation table 510 according to this embodiment. The three-dimensional fabricating model generation table 510 is a table used to generate a three-dimensional fabricating model in a virtual space in order for the fabricated object width calculator 413 to calculate the fabricated object width (cut length) in accordance with the cut direction and cut interval of the laminating surface set by the fabricated object width calculation position setter 412 from the data stored in the three-dimensional fabricating model storage 411.

The three-dimensional fabricating model generation table 510 stores three-dimensional fabricating model data 511, data 512 indicating a virtual space in which a three-dimensional fabricating model is generated, and a three-dimensional fabricating model 513 generated in the virtual space. The data 512 indicating the virtual space sets a virtual space by the X- and Y-axes of the laminating surface and the Z-axis in the laminating direction.

### (Fabricated Object Width Calculation Position Setting Table)

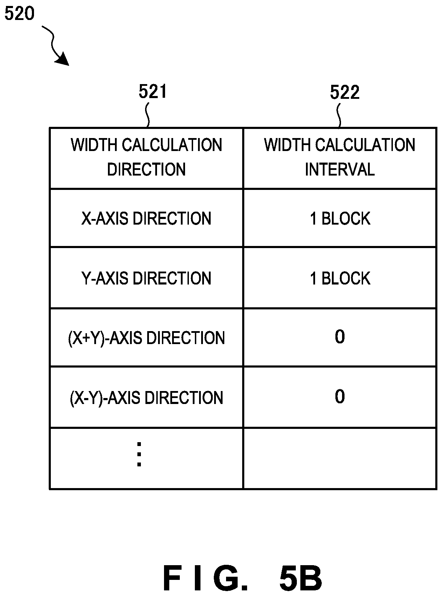

Fig. 5B is a table showing the structure of a fabricated object width calculation position setting table 520 according to this embodiment. The fabricated object width calculation position setting table 520 is used by the fabricated object width calculation position setter 412 to set a width calculation direction and calculation interval.

The fabricated object width calculation position setting table 520 stores a width calculation direction 521 and a width calculation interval 522. Note that in the width calculation direction 521 of Fig. 5B, an (X+Y)-axis direction indicates an intermediate direction of 45° between the X-axis positive direction and the Y-axis positive direction, and an (X-Y)-axis direction indicates an intermediate direction of 45° between the X-axis positive direction and the Y-axis negative direction. In addition, "0" of the width calculation interval 522 indicates that the corresponding axis is not used but the use of each axis may be stored using an additional flag.

### (Shrinkage Suppression Structure model Selection/Arrangement Table)

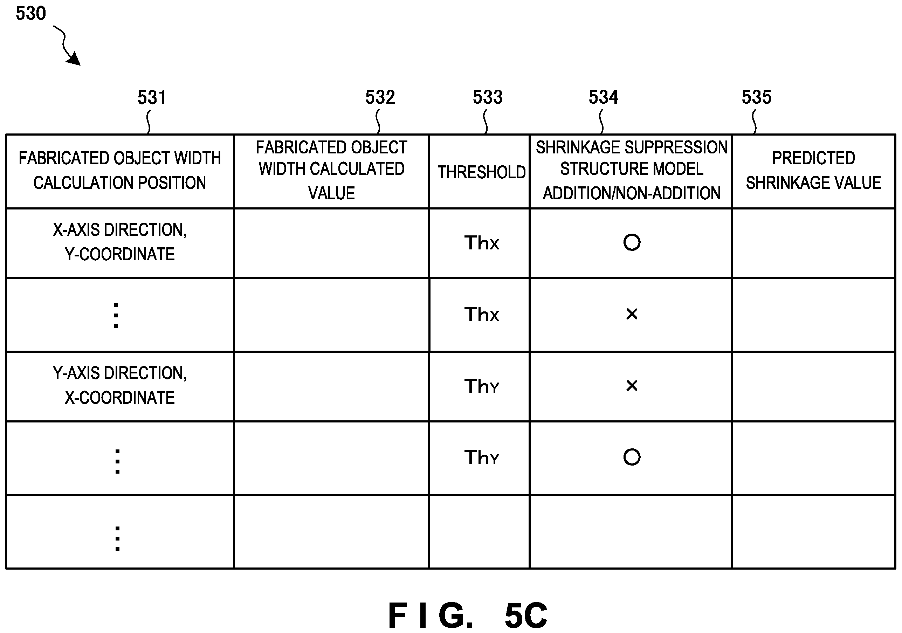

Fig. 5C is a table showing the structure of a shrinkage suppression structure model selection/arrangement table 530 according to this embodiment. The shrinkage suppression structure model selection/arrangement table 530 is used by the shrinkage suppression structure model selection and arrangement unit 403 to select a shrinkage suppression structure model from the shrinkage suppression structure model database 402 based on fabricated object shrinkage prediction, and arrange the selected shrinkage suppression structure model.

The shrinkage suppression structure model selection/arrangement table 530 stores a fabricated object width calculated value 532 corresponding to a fabricated object width calculation position 531, a threshold 533 as a criterion for determining whether to add a shrinkage suppression structure model, shrinkage suppression structure model addition/non-addition 534 as a determination result based on the threshold 533, and a predicted shrinkage value 535 based on a temperature drop, a material, a width (length), and the like.

A pair of (X-axis direction, Y-coordinate) of the fabricated object width calculation position 531 indicates a Y-coordinate position on a cross section in the X-axis direction. A pair of (Y-axis direction, X-coordinate) indicates an X-coordinate position on a cross section in the Y-axis direction. Furthermore, Thx or Thy is set as the threshold, but a different value or the same value may be set for each direction. In the shrinkage suppression structure model addition/non-addition 534, "○" indicates addition of a shrinkage suppression structure model for which the fabricated object width calculated value 532 is equal to or larger than the threshold, and "×" indicates non-addition of a shrinkage suppression structure model for which the fabricated object width calculated value 532 is smaller than the threshold.

### (Shrinkage Suppression Structure model Database)

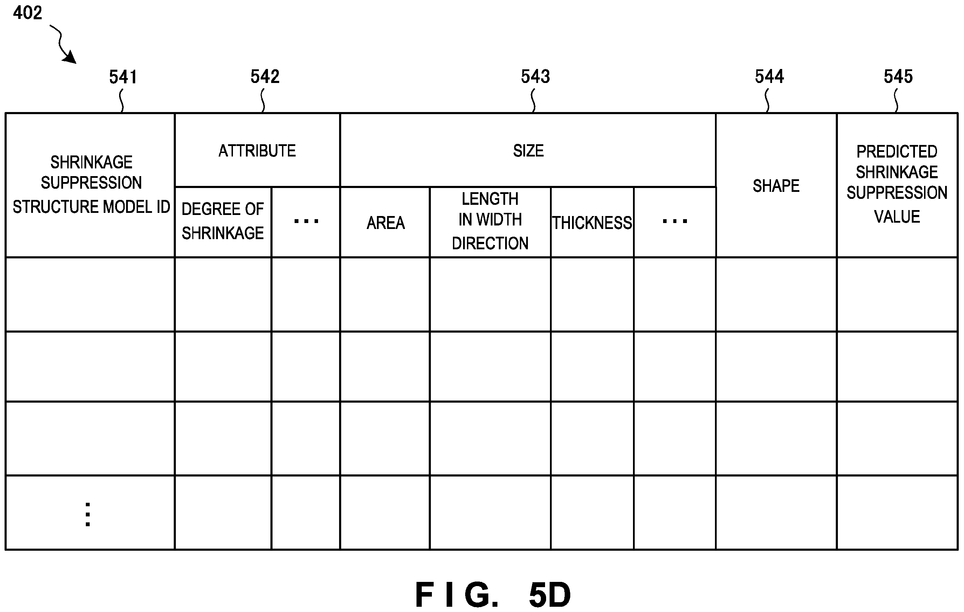

Fig. 5D is a table showing the structure of the shrinkage suppression structure model database 402 according to this embodiment. Note that the structure of the shrinkage suppression structure model database 402 is not limited to that shown in Fig. 5D.

The shrinkage suppression structure model database 402 stores an attribute 542, a size 543, and a shape 544 in association with a shrinkage suppression structure model ID 541. The shrinkage suppression structure model database 402 stores a predicted shrinkage suppression value 545 calculated based on the attribute 542, size 543, and shape 544.

The shrinkage suppression structure model selection and arrangement unit 403 determines, for example, an appropriate shrinkage suppression structure model or an appropriate combination of shrinkage suppression structure models based on the predicted shrinkage value 535 and predicted shrinkage suppression value 545 of the fabricated object of the above information.

### <<Hardware Arrangement of Information Processing Apparatus>>

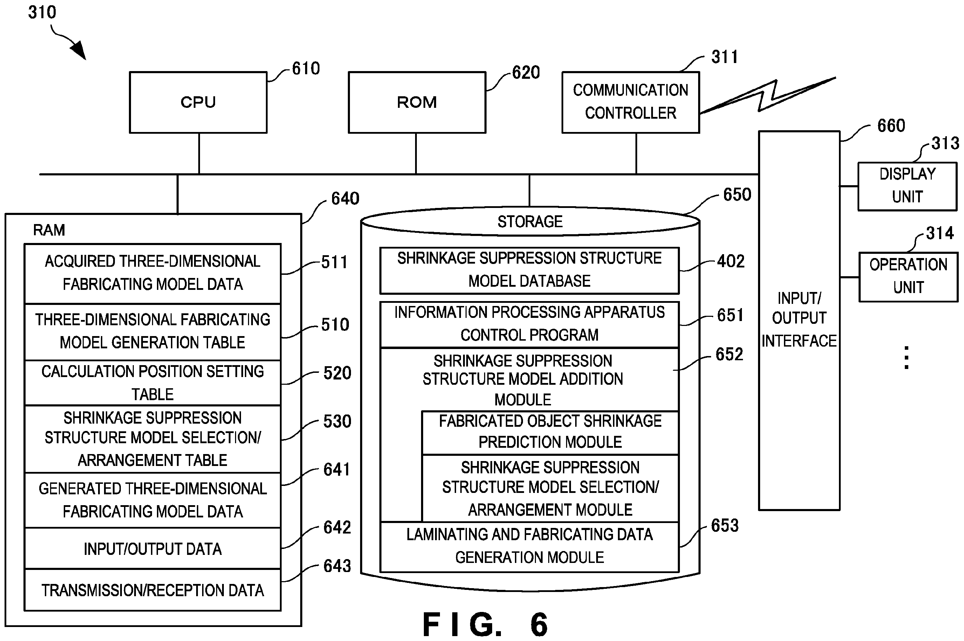

Fig. 6 is a block diagram showing the hardware arrangement of the information processing apparatus 310 according to this embodiment.

Referring to Fig. 6, a CPU (Central Processing Unit) 610 is an arithmetic control processor, and implements the functional components of the information processing apparatus 310 shown in Fig. 3 by executing a program. A ROM (Read Only Memory) 620 stores permanent data such as initial data and a program. A communication controller 311 communicates with the three-dimensional fabricating apparatus 320 via a network. Note that the number of CPUs 610 is not limited to one, and a plurality of CPUs or a GPU (Graphics Processing Unit) for image processing may be included. The communication controller 311 desirably includes a CPU independent of the CPU 610, and writes or reads out transmission/reception data in or from the area of a RAM (Random Access Memory) 640. It is desirable to provide a DMAC (Direct Memory Access Controller) for transferring data between the RAM 640 and a storage 650 (not shown). Furthermore, an input/output interface 660 desirably includes a CPU independent of the CPU 610, and writes or reads out input/output data in or from the area of the RAM 640. Therefore, the CPU 610 processes the data by recognizing that the data has been received by or transferred to the RAM 640. Furthermore, the CPU 610 prepares a processing result in the RAM 640, and delegates succeeding transmission or transfer to the communication controller 311, DMAC, or input/output interface 660.

The RAM 640 is a random access memory used as a temporary storage work area by the CPU 610. An area to store data necessary for implementation of the embodiment is allocated to the RAM 640. The acquired three-dimensional fabricating model data 511 is data of a three-dimensional fabricating model acquired by the information processing apparatus 310. The three-dimensional fabricating model generation table 510 is a table used to generate a three-dimensional fabricating model in a virtual space from the three-dimensional fabricating model data. The fabricated object width calculation position setting table 520 is a table used to set a position at which the width of the fabricated object is calculated. The shrinkage suppression structure model selection/arrangement table 530 is a table used to select a shrinkage suppression structure model from the shrinkage suppression structure model database 402 based on the fabricated object shrinkage prediction, and arrange it at an addition position of the three-dimensional fabricating model. Generated three-dimensional fabricating model data 641 is laminating and fabricating data of the three-dimensional fabricating model added with the shrinkage suppression structure model. Input/output data 642 is data input/output via the input/output interface 660. Transmission/reception data 643 is data transmitted/received via the communication controller 311.

The storage 650 stores a database, various parameters, or the following data or programs necessary for implementation of the embodiment. The shrinkage suppression structure model database 402 is a database for storing shrinkage suppression structure models to be searchable. The storage 650 stores the following programs. An information processing apparatus control program 651 is a control program for controlling the overall information processing apparatus 310. A shrinkage suppression structure model addition module 652 is a module for adding an appropriate shrinkage suppression structure model in correspondence with the fabricated object shrinkage prediction of the three-dimensional fabricating model. The shrinkage suppression structure model addition module 652 includes a fabricated object shrinkage prediction module and a shrinkage suppression structure model selection/arrangement module. A laminating and fabricating data generation module 653 is a module for generating laminating and fabricating data of a three-dimensional fabricating model added with the shrinkage suppression structure model.

The input/output interface 660 interfaces input/output data with an input/output device. The input/output interface 660 is connected to the display unit 313 and the operation unit 314. In addition, a storage medium control apparatus and the like may be connected.

Note that programs and data which are associated with the general-purpose functions of the information processing apparatus 310 and other feasible functions are not shown in the RAM 640 or the storage 650 of Fig. 6.

### <<Three-Dimensional Fabricated Object Manufacturing Procedure of Three-Dimensional Fabricating System>>

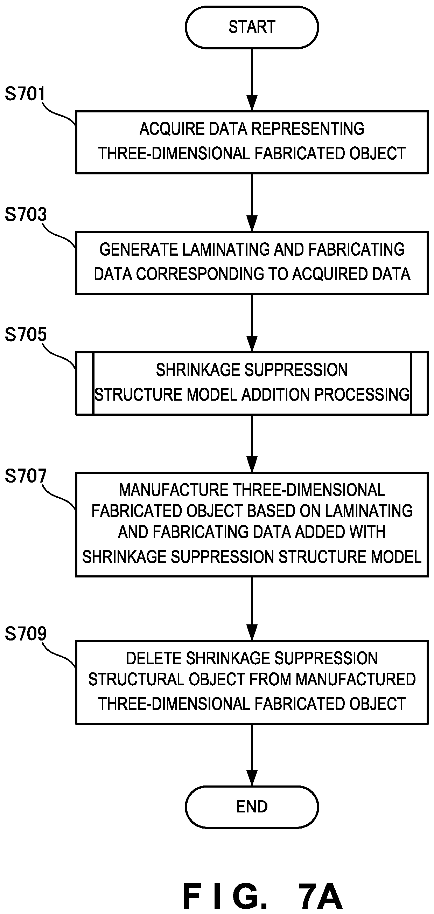

Fig. 7A is a flowchart illustrating the three-dimensional fabricated object manufacturing procedure of the three-dimensional fabricating system 300 according to this embodiment. Note that Fig. 7A shows an example in which the information processing apparatus 310 generates laminating and fabricating data of a three-dimensional fabricating model. However, another external apparatus may generate laminating and fabricating data.

In step S701, the information processing apparatus 310 acquires data representing a three-dimensional fabricated object. In step S703, the information processing apparatus 310 generates laminating and fabricating data of a three-dimensional fabricating model corresponding to the acquired data. In step S705, the information processing apparatus 310 executes processing of adding a shrinkage suppression structure model to the three-dimensional fabricating model as an application according to this embodiment, and transmits the laminating and fabricating data to the three-dimensional fabricating apparatus 320.

In step S707, the three-dimensional fabricating apparatus 320 manufactures the three-dimensional fabricated object added with a shrinkage suppression structural object in accordance with the received laminating and fabricating data added with the shrinkage suppression structure model. In step S709, the three-dimensional fabricating system 300 deletes the shrinkage suppression structural object from the manufactured three-dimensional fabricated object by a predetermined apparatus (not shown). In this way, the desired three-dimensional fabricated object is manufactured.

### (Heat Dissipation Structure model Addition Processing)

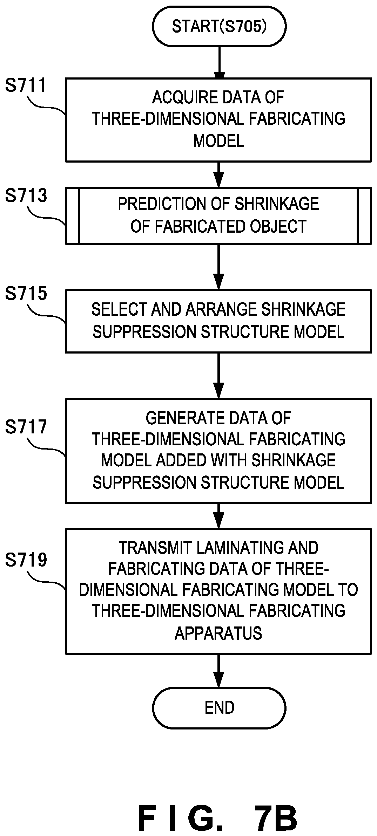

Fig. 7B is a flowchart illustrating the procedure of the heat dissipation structure model addition processing (S705) of the information processing apparatus 310 according to this embodiment. This flowchart is an application formed by a program for generating a shrinkage suppression structure, and is executed by the CPU 610 using the RAM 640, thereby implementing the functional components of the information processing apparatus 310 of Fig. 3.

In step S711, the information processing apparatus 310 acquires the laminating and fabricating data of the three-dimensional fabricating model. In step S713, the information processing apparatus 310 predicts shrinkage of a fabricated object at the time of laminating and fabricating based on the data of the three-dimensional fabricating model. In step S715, the information processing apparatus 310 selects a shrinkage suppression structure model corresponding to the fabricated object shrinkage prediction from the shrinkage suppression structure model database 402, and arranges it in the three-dimensional fabricating model.

In step S717, the information processing apparatus 310 generates laminating and fabricating data of the three-dimensional fabricating model added with the shrinkage suppression structure model. In step S719, the information processing apparatus 310 transmits the laminating and fabricating data of the three-dimensional fabricating model to the three-dimensional fabricating apparatus 320, thereby terminating the heat dissipation structure model addition processing (S705).

### (Fabricated Object Shrinkage Prediction Processing)

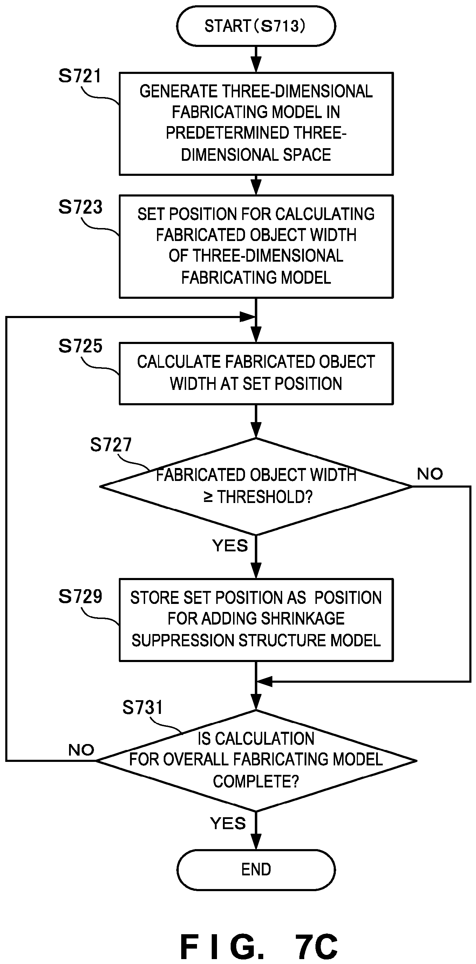

Fig. 7C is a flowchart illustrating the procedure of the fabricated object shrinkage prediction processing (S713) according to this embodiment.

In step S721, the information processing apparatus 310 generates a three-dimensional fabricating model in a predetermined virtual three-dimensional space based on the three-dimensional fabricating model data. In step S723, the information processing apparatus 310 sets a position at which a fabricated object width is calculated. The position at which the fabricated object width is calculated may be set based on an input by the user, or set by the information processing apparatus 310.

In step S725, the information processing apparatus 310 calculates a fabricated object width (a length in the cut direction) while sequentially updating the set position for calculation. In step S727, the information processing apparatus 310 determines whether the fabricated object width (the length in the cut direction) is equal to or larger than the threshold. If the fabricated object width (the length in the cut direction) is equal to or larger than the threshold, the information processing apparatus 310 stores the set position as a position for adding the shrinkage suppression structure model in step S729; otherwise, the information processing apparatus 310 advances to step S731.

In step S731, the information processing apparatus 310 determines whether calculation process of each fabricated object width (the length in each cut direction) obtained by cutting the overall three-dimensional fabricating model and comparison process with the threshold are complete. If processing for the overall three-dimensional fabricating model are not complete, the information processing apparatus 310 returns to step S725 to repeat the processing for the next cross section; otherwise, the fabricated object shrinkage prediction processing (S713) ends.

According to this embodiment, it is possible to select an appropriate position by simplified processing, and add, to a three-dimensional fabricating model, a shrinkage suppression structure model for suppressing shrinkage after laminating and fabricating.

### [Third Embodiment]

An information processing apparatus according to the third embodiment of the present invention will be described next. The information processing apparatus according to this embodiment is different from that according to the second embodiment in that cutting of a laminating surface in a predetermined direction is cutting of the laminating surface at a predetermined interval in four directions equiangularly intersecting each other. The remaining components and operations are the same as those in the second embodiment. Hence, the same reference numerals denote the same components and operations, and a detailed description thereof will be omitted.

### <<Overview of Shrinkage Suppression Structural Object Addition>>

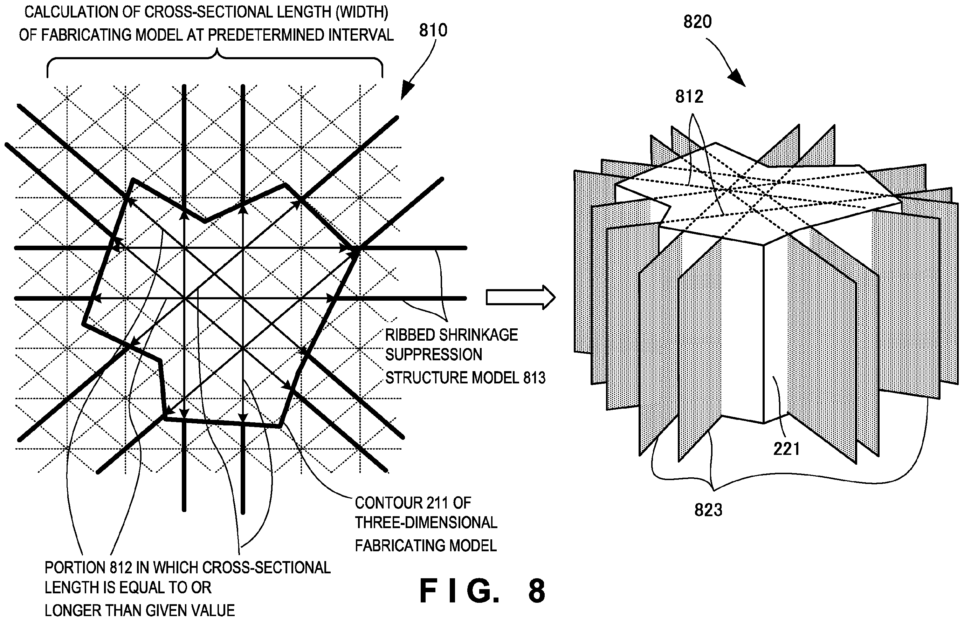

Fig. 8 is a view showing an overview of addition of shrinkage suppression structural objects 823 according to this embodiment. Note that in Fig. 8, the same reference numerals as those in Fig. 2 denote the same components, and a description thereof will be omitted.

Fig. 8 shows a plan view when viewing a three-dimensional fabricating model from above the laminating surface on the left side, and a perspective view of a laminated and fabricated three-dimensional fabricated object on the right side. The left view shows a contour 211 of the three-dimensional fabricating model when viewed from above the laminating surface. In this embodiment, each cross-sectional length obtained by cutting the contour 211 of the three-dimensional fabricating model at a predetermined interval in four directions including axial directions orthogonal to each other on the laminating surface and intermediate directions between the axial directions, that is, each width of the three-dimensional fabricating model on the laminating surface is calculated. A new three-dimensional fabricating model 810 to be fabricated by a three-dimensional fabricating apparatus is obtained by adding ribbed shrinkage suppression structure models 813 in the directions of cut lines (or surfaces) outside the cut positions of portions 812, in each of which the cross-sectional length (width) is equal to or longer than a predetermined threshold, thereby generating laminating and fabricating data to be provided to the three-dimensional fabricating apparatus.

The three-dimensional fabricating apparatus laminates and fabricates a three-dimensional fabricated object 820 shown in the right view based on the provided laminating and fabricating data. In the laminated and fabricated three-dimensional fabricated object 820, the ribbed shrinkage suppression structural objects 823 are added to the portions 812 in each of which the cross-sectional length (width) of a three-dimensional fabricated object 221 to be obtained is equal to or longer than the predetermined threshold. Note that although not shown, the shrinkage suppression structural objects 823 are deleted from the laminated and fabricated three-dimensional fabricated object 820 by a shrinkage suppression structural object deletion apparatus or the like, thereby obtaining the three-dimensional fabricated object 221.

According to this embodiment, it is possible to select an appropriate position by another simplified processing, and add, to a three-dimensional fabricating model, a shrinkage suppression structure model for suppressing shrinkage after laminating and fabricating.

### [Fourth Embodiment]

An information processing apparatus according to the fourth embodiment of the present invention will be described next. The information processing apparatus according to this embodiment is different from those according to the second and third embodiments in that a three-dimensional fabricating model is cut by a straight line passing through the center of a laminating surface perpendicular to a laminating direction, and a position at which a cut length exceeds a threshold is selected as the addition position of a shrinkage suppression structure model. The remaining components and operations are the same as those in the second and third embodiments. Hence, the same reference numerals denote the same components and operations, and a detailed description thereof will be omitted.

### <<Overview of Shrinkage Suppression Structural Object Addition>>

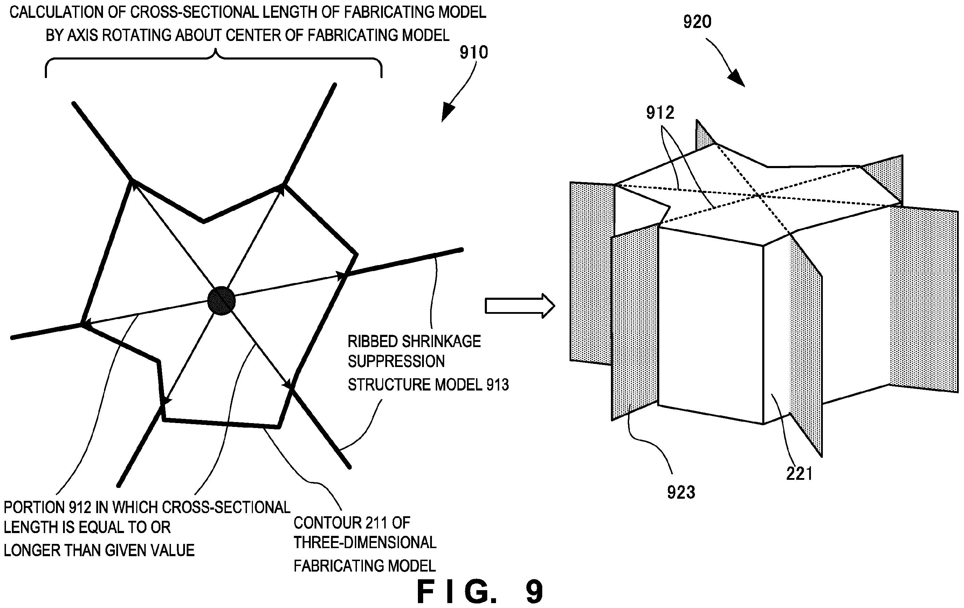

Fig. 9 is a view showing an overview of addition of shrinkage suppression structural objects 923 according to this embodiment. Note that in Fig. 9, the same reference numerals as those in Fig. 2 denote the same components, and a description thereof will be omitted.

Fig. 9 shows a plan view when viewing a three-dimensional fabricating model from above the laminating surface on the left side, and a perspective view of a laminated and fabricated three-dimensional fabricated object on the right side. The left view shows a contour 211 of the three-dimensional fabricating model when viewed from above the laminating surface. In this embodiment, each cross-sectional length obtained by cutting the contour 211 of the three-dimensional fabricating model at a predetermined interval by a surface rotating about the center of the three-dimensional fabricating model on the laminating surface, that is, each width of the three-dimensional fabricating model on the laminating surface is calculated. A new three-dimensional fabricating model 910 to be fabricated by a three-dimensional fabricating apparatus is obtained by adding ribbed shrinkage suppression structure models 913 in the directions of cut lines (or surfaces) outside the cut positions of portions 912, in each of which the cross-sectional length (width) is equal to or longer than a predetermined threshold, thereby generating laminating and fabricating data to be provided to the three-dimensional fabricating apparatus.

The three-dimensional fabricating apparatus laminates and fabricates a three-dimensional fabricated object 920 shown in the right view based on the provided laminating and fabricating data. In the laminated and fabricated three-dimensional fabricated object 920, the ribbed shrinkage suppression structural objects 923 are added to the portions 912 in each of which the cross-sectional length (width) of a three-dimensional fabricated object 221 to be obtained is equal to or longer than the predetermined threshold. Note that although not shown, the shrinkage suppression structural objects 923 are deleted from the laminated and fabricated three-dimensional fabricated object 920 by a shrinkage suppression structural object deletion apparatus or the like, thereby obtaining the three-dimensional fabricated object 221.

According to this embodiment, it is possible to select an appropriate position by still other simplified processing, and add, to a three-dimensional fabricating model, a shrinkage suppression structure model for suppressing shrinkage after laminating and fabricating.

### [Fifth Embodiment]

An information processing apparatus according to the fifth embodiment of the present invention will be described next. The information processing apparatus according to this embodiment is different from those according to the second to fourth embodiments in that shrinkage suppression structural objects are readily deleted from a three-dimensional fabricated object after laminating and fabricating by narrowing the cross section of an addition portion to the three-dimensional fabricating model of a shrinkage suppression structure model as compared with the cross section of the shrinkage suppression structure model. The remaining components and operations are the same as those in the second embodiment. Hence, the same reference numerals denote the same components and operations, and a detailed description thereof will be omitted.

### <<Overview of Shrinkage Suppression Structural Object Addition>>

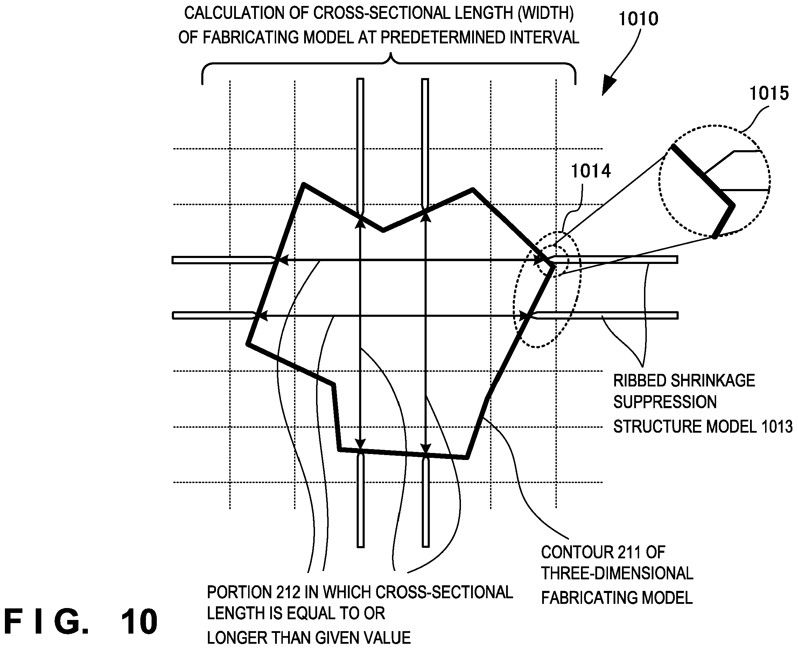

Fig. 10 is a view showing an overview of shrinkage suppression structural object addition according to this embodiment. Note that in Fig. 10, the same reference numerals as those in Fig. 2 denote the same components, and a description thereof will be omitted. Fig. 10 does not show a perspective view (corresponding to the right view of Fig. 2) of a laminated and fabricated three-dimensional fabricated object.

Fig. 10 shows a plan view when viewing a three-dimensional fabricating model from above a laminating surface, which shows a contour 211 of the three-dimensional fabricating model when viewed from above the laminating surface. In this embodiment, a new three-dimensional fabricating model 1010 to be fabricated by a three-dimensional fabricating apparatus is obtained by adding ribbed shrinkage suppression structure models 1013 each including a tapered connection portion 1014 to a three-dimensional fabricating model, in the directions of cut lines (or surfaces) outside the cut positions of portions 212, in each of which the cross-sectional length (width) is equal to or longer than a predetermined threshold, thereby generating laminating and fabricating data to be provided to the three-dimensional fabricating apparatus. Note that details of the connection state become apparent by seeing an enlarged view 1015 of the connection portion 1014.

It is possible to readily delete the shrinkage suppression structural objects from the three-dimensional fabricated object laminated and fabricated by the three-dimensional fabricating apparatus based on the laminating and fabricating data.

According to this embodiment, it is possible to readily delete, from a three-dimensional fabricated object, a shrinkage suppression structural object added to suppress shrinkage after laminating and fabricating.

### [Sixth Embodiment]

An information processing apparatus according to the sixth embodiment of the present invention will be described next. The information processing apparatus according to this embodiment is different from those according to the second to fifth embodiments in that the information processing apparatus includes a shrinkage suppression structure leaning unit for evaluating a shrinkage suppression structural object based on laminating and fabricating data of a three-dimensional fabricating model, laminating and fabricating data of a three-dimensional fabricating model added with a shrinkage suppression structure model, and measurement data of a three-dimensional fabricated object as a laminating and fabricating result. The remaining components and operations are the same as those in the second to fifth embodiments. Hence, the same reference numerals denote the same components and operations, and a detailed description thereof will be omitted.

### (Shrinkage Suppression Structure model Adder)

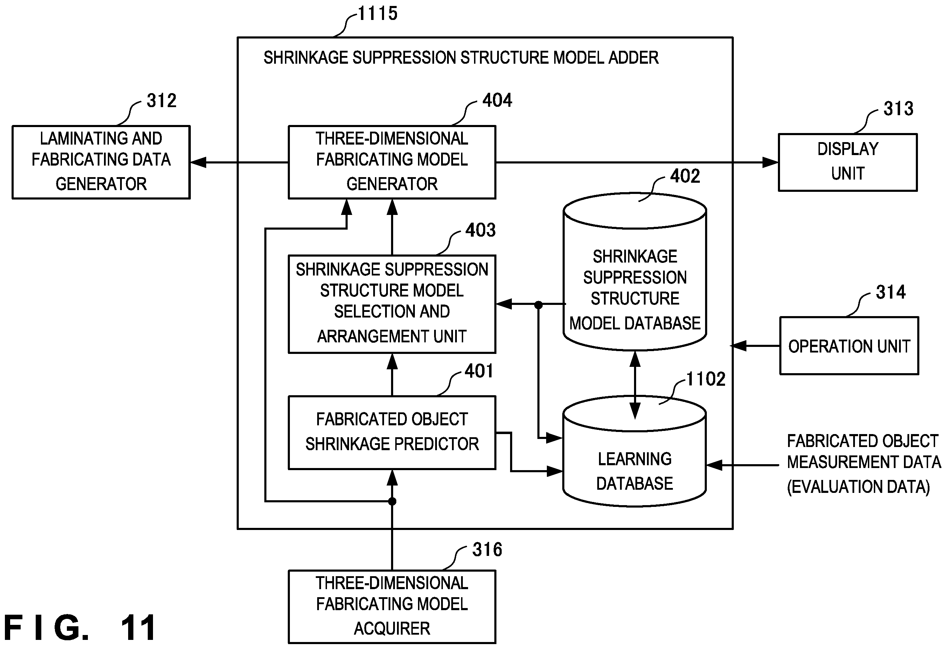

Fig. 11 is a block diagram showing the arrangement of a shrinkage suppression structure model adder 1115 according to this embodiment. Note that in Fig. 11, the same reference numerals as those in Fig. 4 denote the same functional components, and a description thereof will be omitted.

A learning database 1102 evaluates a shrinkage suppression structure model based on laminating and fabricating data of an acquired three-dimensional fabricating model, laminating and fabricating data of a three-dimensional fabricating model added with a shrinkage suppression structure model, and measurement data of a three-dimensional fabricated object as a laminating and fabricating result. By modifying a shrinkage suppression structure model database 402 based on the evaluation result, a more appropriate shrinkage suppression structure model is selected and a more appropriate shrinkage suppression structure model is added.

According to this embodiment, it is possible to select an appropriate addition position and a shrinkage suppression structure model for suppressing shrinkage after laminating and fabricating, in correspondence with a three-dimensional fabricating model.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. An information processing apparatus comprising:
an acquirer that acquires laminating and fabricating data of a three-dimensional fabricating model; and
a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

2. The information processing apparatus according to claim 1, wherein said data generator includes
a selector that cuts the laminating surface perpendicular to a laminating direction of the three-dimensional fabricating model in a predetermined direction at a predetermined interval, and selects, as an addition position, a position at which a length of cut line is not shorter than the threshold and
a shrinkage suppression structure model adder that adds the shrinkage suppression structure model extending in the predetermined direction at the selected addition position.

3. The information processing apparatus according to claim 2, wherein said selector cuts the laminating surface at a predetermined interval in two directions orthogonal to each other, or at a predetermined interval in four directions equiangularly intersecting each other.

4. The information processing apparatus according to claim 2, wherein said selector cuts the laminating surface by a straight line passing through a center of the laminating surface.

5. The information processing apparatus according to any one of claims 2 to 4, wherein said data generator includes
a storage that stores a plurality of shrinkage suppression structure models which are different in at least one of a shape, a thickness and an area, and
a shrinkage suppression structure model selector that selects a shrinkage suppression structure model to be added from the plurality of shrinkage suppression structure models, based on a shape of the three-dimensional fabricating model and the cut length.

6. The information processing apparatus according to any one of claims 1 to 5, wherein the shrinkage suppression structure model is a structure model extending in the predetermined direction and having a length which can suppress shrinkage after laminating and fabricating.

7. The information processing apparatus according to claim 6, wherein in the structure model, a first fabricating layer is in tight contact with a fabricated object support table.

8. The information processing apparatus according to any one of claims 1 to 7, wherein the shrinkage suppression structure model is added to a position at which a shrinkage suppression structural object can be deleted from a three-dimensional fabricated object after laminating and fabricating.

9. The information processing apparatus according to any one of claims 1 to 8, wherein a cross section of the shrinkage suppression structure model at an addition portion to the three-dimensional fabricating model is narrower than a cross section of the shrinkage suppression structure model.

10. The information processing apparatus according to any one of claims 1 to 9, further comprising a data transmitter that transmits laminating and fabricating data of a three-dimensional fabricating model after addition, to a laminating and fabricating apparatus for laminating and fabricating a three-dimensional fabricated object.

11. The information processing apparatus according to any one of claims 1 to 10, further comprising a shrinkage suppression structure learning unit that evaluates the shrinkage suppression structure model based on the laminating and fabricating data of the acquired three-dimensional fabricating model, the laminating and fabricating data of the three-dimensional fabricating model added with the shrinkage suppression structure model, and measurement data of a three-dimensional fabricated object as a laminating and fabricating result.

12. A method of generating a shrinkage suppression structure of a three-dimensional fabricated object, comprising:
acquiring laminating and fabricating data of a three-dimensional fabricating model; and
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

13. A program for generating a shrinkage suppression structure of a three-dimensional fabricated object, for causing a computer to execute a method, comprising:
acquiring laminating and fabricating data of a three-dimensional fabricating model; and
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction.

14. A three-dimensional fabricating system comprising:
a model generator that generates laminating and fabricating data of a three-dimensional fabricating model from data representing a three-dimensional fabricated object;
a data generator that generates laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction; and
a laminating and fabricating unit that fabricates a three-dimensional fabricated object added with a shrinkage suppression structural object in accordance with the laminating and fabricating data generated by said data generator.

15. A method of manufacturing a three-dimensional fabricated obj ect, comprising:
generating laminating and fabricating data of a three-dimensional fabricating model from data representing a three-dimensional fabricated object;
generating laminating and fabricating data of a three-dimensional fabricating model added, when a width in a predetermined direction on a laminating surface of a fabricated object is equal to or larger than a threshold, with a shrinkage suppression structure model for suppressing shrinkage after laminating and fabricating, in the predetermined direction; and
fabricating a three-dimensional fabricated object added with a shrinkage suppression structural object in accordance with the laminating and fabricating data generated in said generating step.
